Europäisches Patentamt

European Patent Office

Office européen des brevets

(11) Publication number: **0 402 599**

**A1**

## (12) EUROPEAN PATENT APPLICATION

(21) Application number: **90107983.0**

(22) Date of filing: **26.04.90**

(51) Int. Cl.5: **B25J 9/08, B25J 9/00, B25J 5/00**

The title of the invention has been amended (Guidelines for Examination in the EPO, A-III, 7.3).

(30) Priority: **26.04.89 JP 104724/89**

(43) Date of publication of application:
**19.12.90 Bulletin 90/51**

(84) Designated Contracting States:
**DE FR GB**

(71) Applicant: **HITACHI, LTD.**
**6, Kanda Surugadai 4-chome**
**Chiyoda-ku, Tokyo 100(JP)**

(72) Inventor: **Ezawa, Naoya, Hitachi Maioka**
**Daiichi Shataku A-302**
**115-4 Maiokacho, Totsuka-ku**
**Yokohama-shi(JP)**
Inventor: **Takarada, Shinichi**
**of Fukiageryo 224, 487 Harajukucho**
**Totsuka-ku, Yokohama-shi(JP)**

(74) Representative: **Altenburg, Udo, Dipl.-Phys. et al**
**Patent- und Rechtsanwälte**
**Bardehle-Pagenberg-Dost-Altenburg & Partner Postfach 86 06 20**
**D-8000 München 86(DE)**

(54) Working machine system comprising detachable manipulating arms.

(57) A working machine system is arranged in such a manner that at least one large arm constituted such that a small arm can be attached thereto is attached to the working machine body and at least one large arm is detachably attached to the working machine body. Thus, sufficient stiffness and strength of the arms can be secured to obtain desired positioning accuracy while restricting an excessive weight increase. In addition, any of the arms can be replaced, the number of the cables can be reduced, and the cable can thereby be arranged easily.

FIG. I

# WORKING MACHINE SYSTEM

## BACKGROUND OF THE INVENTION

### FIELD OF THE INVENTION

The present invention relates to a working machine system capable of replacing arms and changing installing positions of arms, and, more particularly, to a working machine system suitably used for executing dexterous operations in space or an nuclear facility.

### DESCRIPTION OF THE RELATED ART

Hitherto, a working machine system of a type disclosed, for example, in Japanese Patent Unexamined Publication No. 63-89280 has been arranged in such a manner that small manipulators (small arms) are attached to plural portions of a relatively-large manipulator (large arm) thereof.

However, the above-described conventional working machine system arises the following problems since it is, as described above, arranged such that plural small arms are attached to one large arm thereof:

(1) Since the one large arm must endure the force loaded on the plural small arms and must have sufficient stiffness and strength to obtain the terminal-positioning accuracy of each of the small arms, the weight of the overall system is inevitably and excessively enlarged.

(2) Although the large arm and each of the small arms possess substantially the same degree of reliability and they must therefore be subjected to the same level maintenace, the configuration is arranged in such a manner that the small arms can be replaced but the large arm cannot be replaced. Therefore, it is difficult to maintain the reliable operation of the large arm.

(3) Since both a driving unit for driving the joints of the large and small arms and a control computer are installed in the portions other than the arms, the number of cables for establishing the connections among the joints, the driving unit and the control computer becomes too large. In particular, the large arm must have, in addition to the cables for use therein, about a hundred cables as the power cables and signal cables for controlling the plural small arms. Therefore, in the case where the temperature condition is extremely severe such as in space, it is very difficult to arrange the cables along the arms in such a manner that power loss is minimized when the cables are bent to follow the joint moving action and that the arms and the cables do not interfere with one another when the arms are operated.

## SUMMARY OF THE INVENTION

An object of the present invention is to provide a working machine system capable of controlling at least one arm at required positioning accuracy, capable of replacing any of the arms and capable of reducing the number of the cables in the arms.

In order to achieve the object described above, a working machine system according to the present invention is arranged in such a manner that at least one large arm to which a small arm can be attached is attached to a working machine body and at least one large arm is detachably attached to the working machine body.

The large arm and/or the small arm can have 7 or more degrees of freedom and can be constituted to be a master-slave system for the purpose of improving operability.

The large arm and/or the small arm can attach two or more types of end effectors thereto for the purpose of improving operability.

Furthermore, a driving unit connected to a central processing unit installed in the working machine body can be installed at the junction between the large arm and the small arm and/or the junction between the large arm and the working machinebody for the purpose of reducing the number of cables or the like.

The large arm and/or the small arm can be constituted in such a manner that it can be controlled in a force feedback manner for the purpose of preventing damage due to an overload at the time of the operation.

Since the configuration according to the present invention is arranged in such a mannre that the large arm can be detachable to the working machine body, a plural large arms can be attached to the working machine body and a plural small arms can be attached to the plural large arms respectively when a plural small arms are desired to be attached.

Therefore, force loaded on the plural small arms can be supported by the plural large arms so that the stiffness and the strength of the arm are secured.

Furthermore, since a large arm and a small arm forming a pair are constituted in a master slave system having 7 or more degrees of freedom and they can be controlled in a force feedback manner, the terminal position of the small arm can be accurately positioned. In addition, since sense of force at the time of the operation of the arm can be controlled, the structure damage of the arm by overload can be prevented.

In addition, since at least one arm can be exchangeably attached a maintenance operation can be easily performed.

Furthermore, since a driving unit connected to a central processing unit installed in the working machine body is installed at the junction between the large arm and the small arm and/or the junction between the large arm and the working machine body, the number of the power cables and the signal cables for operating the central processing unit and the small arms can be reduced to about one fifth. Therefore, the large arm can be easily attached to and detached from the working machine body.

Other and further objects, features and advantages of the invention will be appear more fully from the following description.

BRIEF DESCRIPTION OF THE DRAWINGS

Fig. 1 is a perspective view which illustrates an embodiment of a multi-arm working machine according to the present invention;

Figs. 2A and 2B are circuit diagrams for use in an example of a control system;

Fig. 3 is a circuit diagram for use in another example of the control system;

Fig. 4 is a perspective view which illustrates an example of a configuration to which the present invention is applied;

Fig. 5 is a perspective view which illustrates another example of a configuration to which the present invention is applied;

Fig. 6 is a perspective view which illustrates other example of a configuration to which the present invention is applied;

Fig. 7 is a perspective view which illustrates other example of a configuration to which the present invention is applied; and

Fig. 8 is a developed view which illustrates other example of a configuration to which the present invention is applied.

DESCRIPTION OF THE PREFERRED EMBODIMENTS

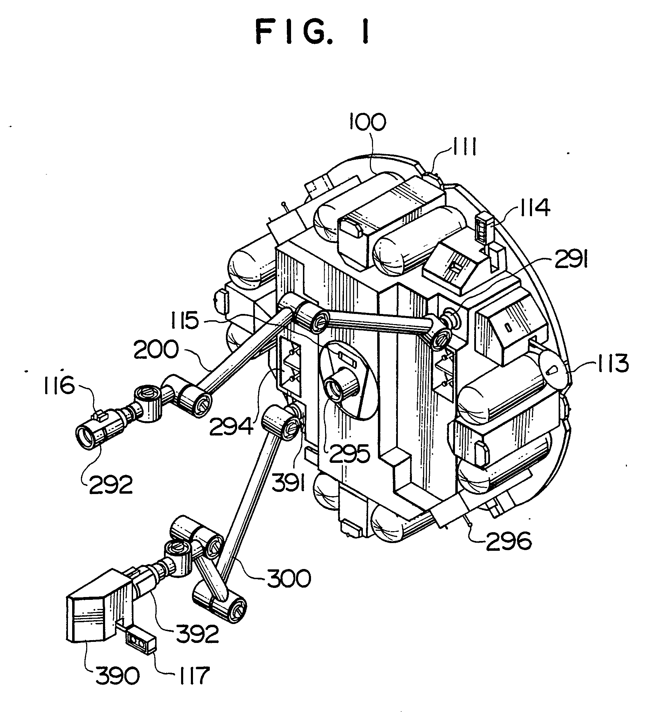

An embodiment of a multi-arm working machine according to the present invention will now be described with reference to Fig. 1.

Referring to Fig. 1, reference numeral 100 represents a working machine body which movably support two arms of manipulators 200 and 300 including large arms and small arms via first capturing devices 291 and 391, the manipulators 200 and 300 having an end effector 390 attached to the front end portion thereof via second capturing devices 292 and 392. The first capturing devices 291 and 391 and the second capturing devices 292 and 392 can, as disclosed in, for example, U.S. Patent No. 4,105,241 and Japanese Patent Unexamined Publication Nos. 1-16912 and 2-30483, be coupled in all directions while generating no gap so as to enable the end effector 390 to be detachable and replaceable, the second capturing devices 292 and 392 also having a capability of capturing payloads.

The working machine body 100 has an end effector accommodating rack 294 for accommodating a variety of end effectors 390 so that the working machine is able to complete various kinds of operations.

The working machine body 100 also has a communication device 113, the communication device enabling the working machine to be remote-controlled.

Furthermore, the working machine body 100 has an attitude control device 111, the attitude control device 111 enabling the attitude of the working machine to be controlled in space.

The working machine body 100 has a docking device 295, the docking device 295 enabling the working machine to be docked and rigidized to a floating object in space.

The working machine body 100 has a holding device 296, the holding device 296 being arranged such that it can be captured by the manipulator (omitted from illustration) of another working machine or attached or rigidized to the same.

The working machine body 100 has vision devices 114 and 115, the vision devices 114 and 115 having an operation monitoring function in association with vision devices 116 and 117 provided in the corresponding manipulators 200 and 300.

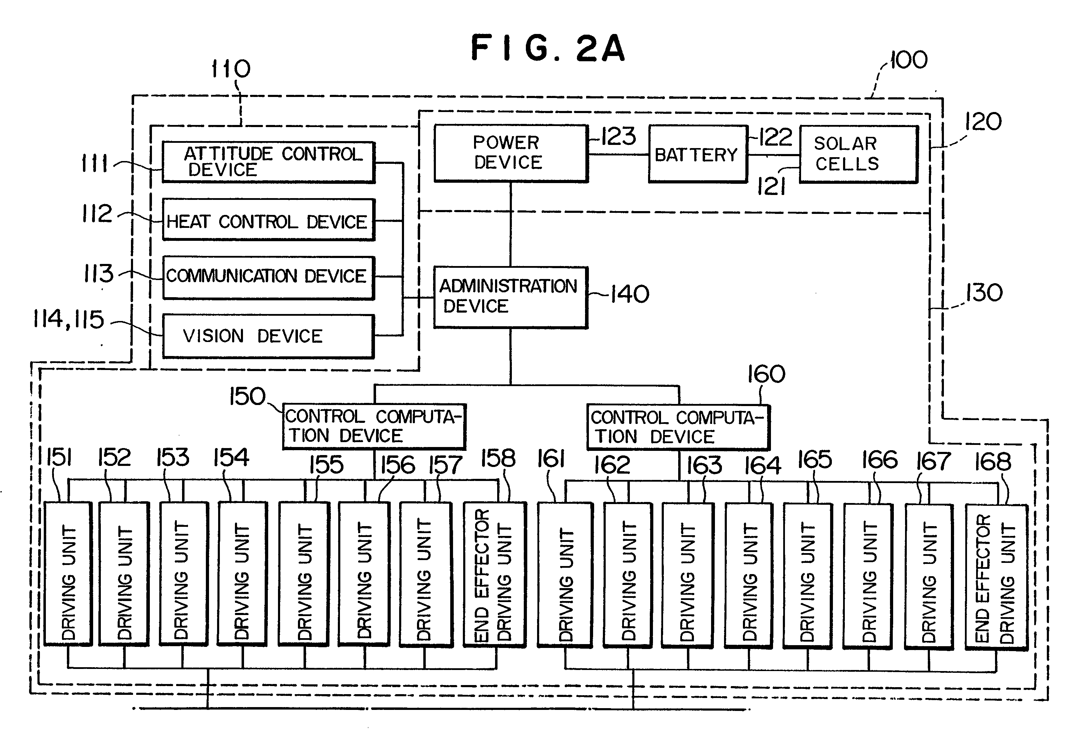

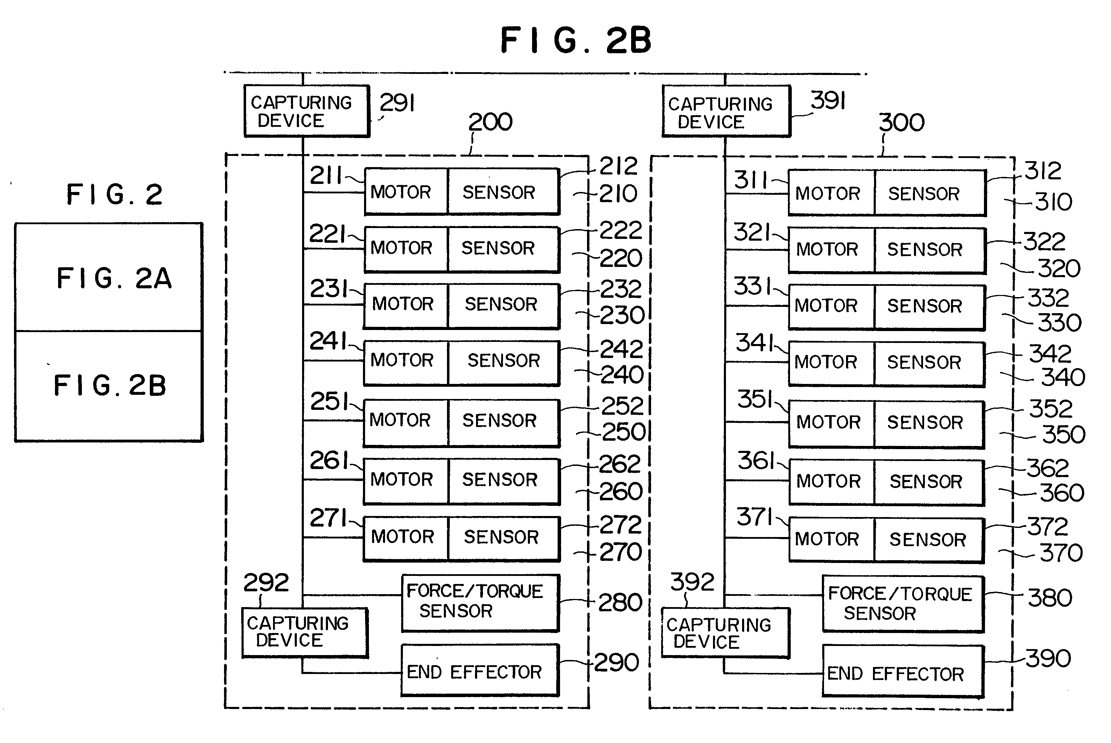

Then, a control circuit for operating the above-described working machine will be described with reference to Fig. 2.

As shown in Fig. 2, the wroking machine body 100 consists of sub-system 110, a power system 120 and a manipulator-control system 130.

The sub-system 110 comprises the attitude control device 111, a heat control device 112, the communication device 113 and the vision devices 114 and 115. As a result, the working machine body 100 can remotely perform its operations in space.

The power system 120 comprises solar cells 121, a battery 122 and a power device 123. As a result, electric power can be generated, stored and supplied to the working machine system. The control system 130 consists of an administration device 140 connected to the sub-system 110, the power system 120 and the manipulators 200 and 300 and administering and controlling the above-described systems control computation devices 150 and 160 for control-computing the manipulators 200 and 300; and driving units 151 to 157 and 161 to 167 for respectively driving the joints 210, 220, 230, 240, 250, 260, 270, 310, 320, 330, 340, 350, 360 and 370 of the manipulators 200 and 300.

The manipulator 200 has a force torque sensor 280, the force torque sensor 280 having, at its terminal portion, an end effector 290 via the second capturing device 292.

The joint 210 consists of a motor 211 and a sensor 212 for controlling the motor 211. The other joints 220, 230, 240, 250, 260 and 270 are constituted similarly to the above-described way.

The other manipulator 300 is, similarly to the manipulator 200, attached to the working machine body 100 via the first capturing device 391, the first capturing device 391 having a function of supplying power and transmitting and receiving signals which are necessary for the manipulator 300. The configuration of the joints 310, 320, 330, 340, 350, 360 and 370 are arranged to be similar to those of the joints of the manipulator 220.

Then, the operation of the working machine system according to this embodiment will be described with reference to Fig. 2. When the communication device 113 receives an operation command and then transmits the thus received operation command to the administration device 140, the administration device 140 sets the targets of the operations of the two manipulators 200 and 300 in accordance with the supplied operation command and then supplies commands about the positions and the attitudes of the terminal portions of the manipulators 200 and 300 to the first and the second control computation devices 150 and 160.

The first and the second control-computation devices 150 and 160 obtain the angles of the joints 210, 220, 230, 240, 250, 260, 270, 310, 320, 330, 340, 350, 360 and 370 of the manipulators 200 and 300 by inverse transformation computations for the purpose of obtaining the target positions and the attitudes commanded by the administration device 140. The thus-obtained angles are supplied, as the commanded values for the joints 210, 220, 230, 240, 250, 260, 270, 310, 320, 330, 340, 350, 360 and 370, to the corresponding driving units 151 to 157 and 161 to 167 by the first and the second control-computation devices 150 and 160. Since the above-described commands given to the driving units 151 to 157 and 161 to 167 are in the form of digital signals, the digital signals are converted into analog signals and their signal levels are amplified up to required levels. The thus formed analog signals whose levels have been amplified are then supplied from the driving units 151 to 157 and 161 to 167 to the joints 210, 220, 230, 240, 250, 260, 270, 310, 320, 330, 340, 350, 360 and 370 of the manipulators 200 and 300 via the first and the second capturing devices 291 and 391. Therefore, in the joint 210, the motor 211 is rotated in response to the driving signal supplied from the driving unit 151 so that a predetermined joint angle is obtained. The thus obtained joint angle is detected by the sensor 212 and an output signal corresponding to the joint angle is fed back to the driving unit 151 so that a servo system is constituted. Similar operations are performed in the other joint driving units 152 to 157 and 161 to 167 so that predetermined positions and attitudes of the terminal portions of the two manipulators 200 and 300 are obtained.

On the other hand, the end effectors 290 and 390 are operated in response to signals supplied from the corresponding driving units 158 and 168 which have received the commands from the first and the second control-computation devices 150 and 160.

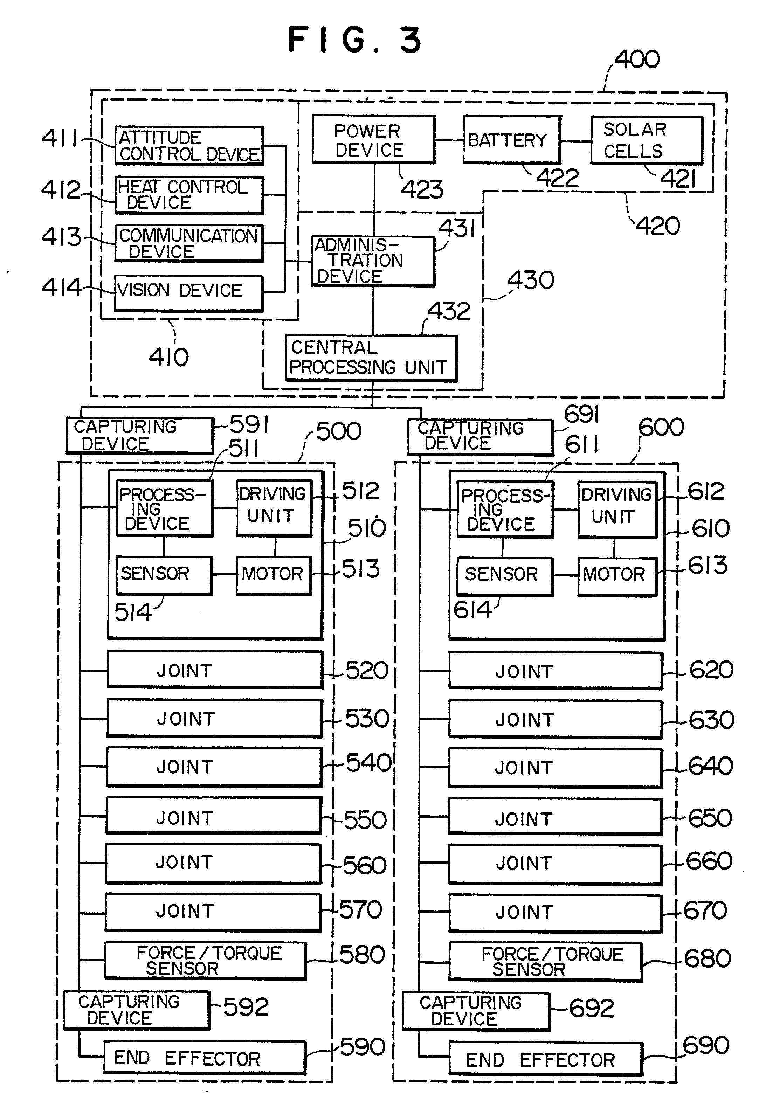

Then, a control circuit for use in a manipulator having a distributed type control system according to another embodiment of the present invention will now be described with reference to Fig. 3.

When a communication device 413 receives an operation command, it transmits the thus received operation command to an administration device 431. The administration device 431 sets the targets of the operations of two manipulators 500 and 600 in accordance with the supplied operation command and supplies commands about the positions and the attitudes of the terminal portions of the manipulators 500 and 600 to a central processing unit 432. The central processing unit 432 obtains the angles of joints of the manipulators 500 and 600 by inverse transformation computations for the purpose of obtaining the supplied target positions and the attitudes, and then supplies the thus obtained joint angles, as the commanded values, to the joints 510, 520, 530, 540, 550, 560, 570, 610, 620, 630, 640, 650, 660 and 670 of the manipulators 500 and 600. As a result, for example in the joint 510, the thus supplied command is converted into an analog signal and its signal level is amplified up to a required level by a joint processing unit 511 thereof. In response to the thus supplied signal, a motor 513 is operated via a driving unit 512. Since the rotational angle of the motor 513 is detected by a sensor 514 and the result of the detection is fed back to the driving unit 512, a servo loop is closed. On the other hand, the processing unit 511 generates the joints to perform dynamic motions. Specifically, the processing unit 511 has a signal compensating function for the purpose of operating the joints to act smoothly by adding a first order lag or the like if a speed command which is transmitted from the central processing unit 432 is extremely high or low in comparison to the present rotational speed of the motor 513.

The difference between the control circuit according to this embodiment and that shown in Fig. 2 lies in that the driving units 512 and 612 and the processing units 511 and 611 of the manipulators 500 and 600 are distributed to a group consisting of the joints 510, 520, 530, 540, 550, 560 and 570 and a group consisting of joints 610, 620, 630, 640, 650, 660, and 670. Therefore, the electric connection between a working machine body 400 and the manipulator 500 or 600 can be established only by power cables and the command signals supplied to each of the joint processing units. Furthermore, in terms of the signals, if a serial bus is employed, the number of the cables passing through the manipulator 500 or 600 can be significantly reduced. Therefore, the size and the weight of the manipulator 500 and 600 can be significantly reduced. Furthermore, the electric interfaces between the working machine body 400 and the manipulator 500 or 600 can be satisfactorily simplified.

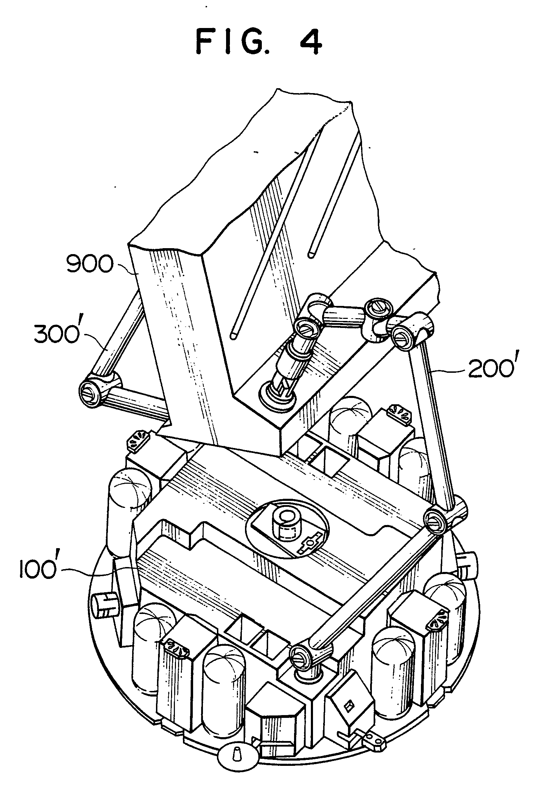

Then, an embodiment of the multi-arm working machine applied to a spacecraft such as the platform of a space station will now be described with reference to Fig. 4.

As shown in Fig. 4, a working machine body 100' comprises two manipulators 200' and 300', the manipulator 200' having a degree of freedom in seven directions (X, Y, Z, $\alpha$, $\beta$, $\gamma$ and another direction). Therefore, two points of the subject 900 to be operated of the illustrated shape can be held so that the subject 900 to be operated can be handled from a desired direction.

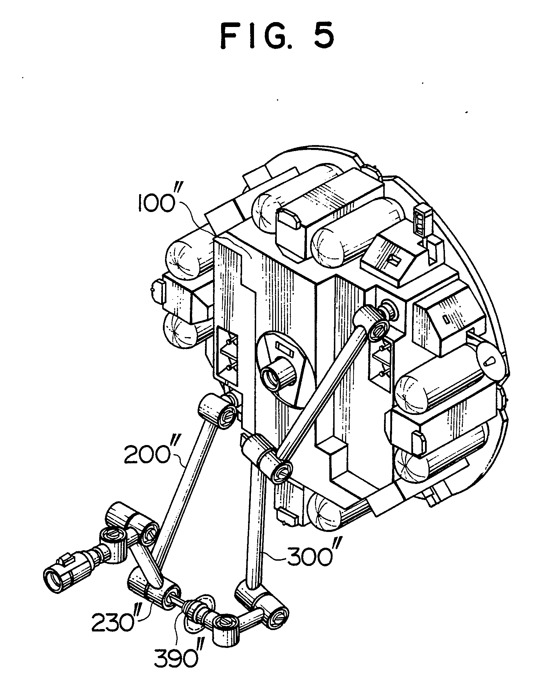

Then, a multi-arm working machine capable of maintaining the failure manipulator of two manipulators thereof and according to another embodiment of the present invention will now be described with reference to Fig. 5.

Fig. 5 illustrates a state in which a working machine body 100" comprising two manipulators 200" and 300" acts such that: since the manipulator 200" has been broken, the terminal portion of an end effector 390" of the residual manipulator 300" is inserted and connected to a drive shaft (omitted from illustration) of a joint 230" of the manipulator 200". Thus, the residual manipulator 300" is enabled to set the joint 230" of the manipulator 200" to a predetermined angle so that the operation is continued or the joint 230" is rotated and the manipulator 200" is stowed, such that it does not disturb the operation, for the purpose of replacing the overall body of the arm by a new one.

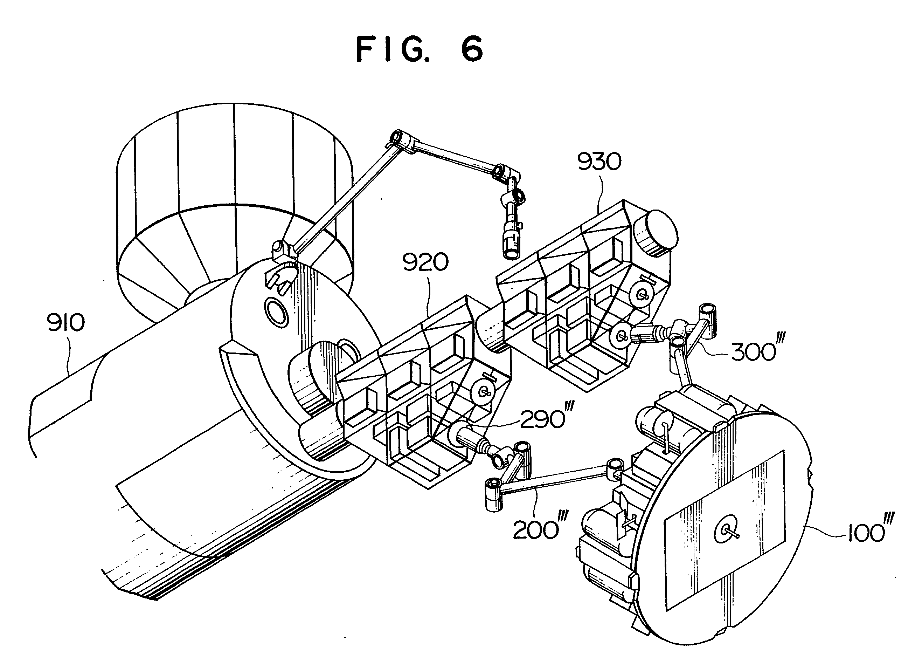

Then, other embodiment of a multi-arm working machine for maintaining and inspecting a space station will now be described with reference to Fig. 6.

As shown in Fig. 6, a space station 910 is used to carry out a variety of experiments in a space environment. Therefore, the space station 910 comprises exposed facilities 920 and 930, the exposed facilities 920 and 930 being maintained and inspected by a working machine body 100‴ comprising two manipulators 200‴ and 300‴. A desired operation is conducted in such a manner that the working table 920 is captured by an end effector 290‴ attached at the terminal portion of the manipulator 200‴, the working machine body 100‴ is rigidized to the space station 910 and a desired operation is performed at a desired positon on the working table 930 by the manipulator 300‴.

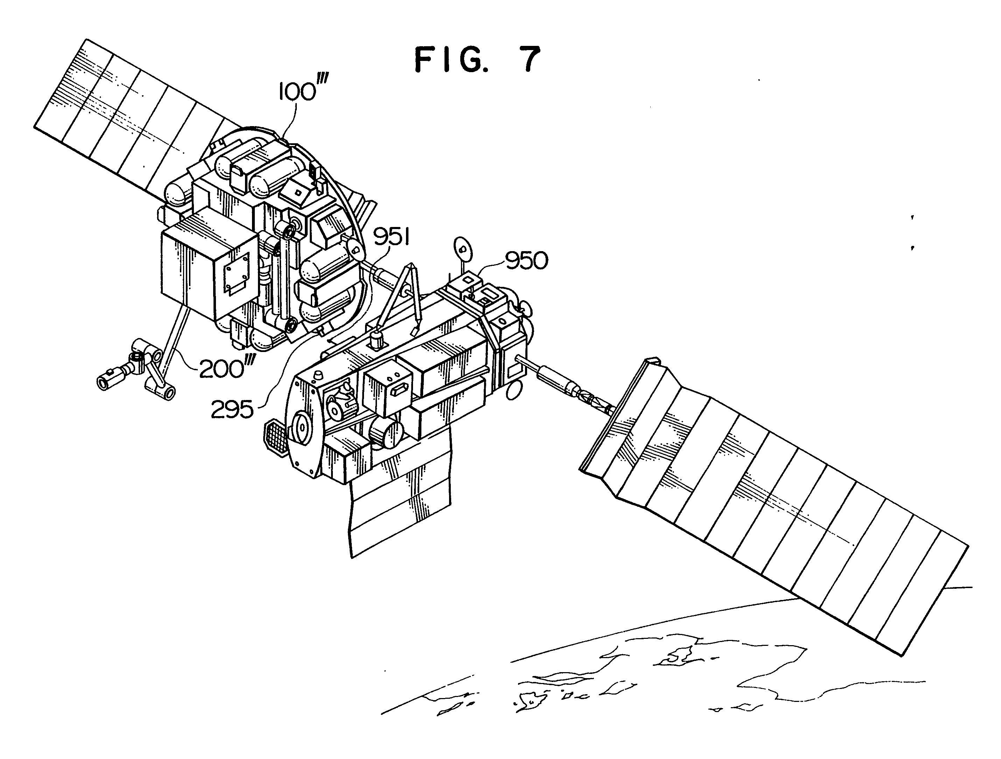

Then, other embodiment of a multi-arm working machine for maintaining and inspecting an artificial satellite will now be described with reference to Fig. 7.

Referring to Fig. 7, an artificial satellite 950 has a holding portion 951 which can be docked with the docking device 295 of the working machine body 100‴. Therefore, the working machine body 100‴ can be rigidized to the artificial satellite 950. Thus, a required position of the artificial satellite 950 can be, in the above-described state, maintained and inspected by the two manipulators 200‴ and 300‴.

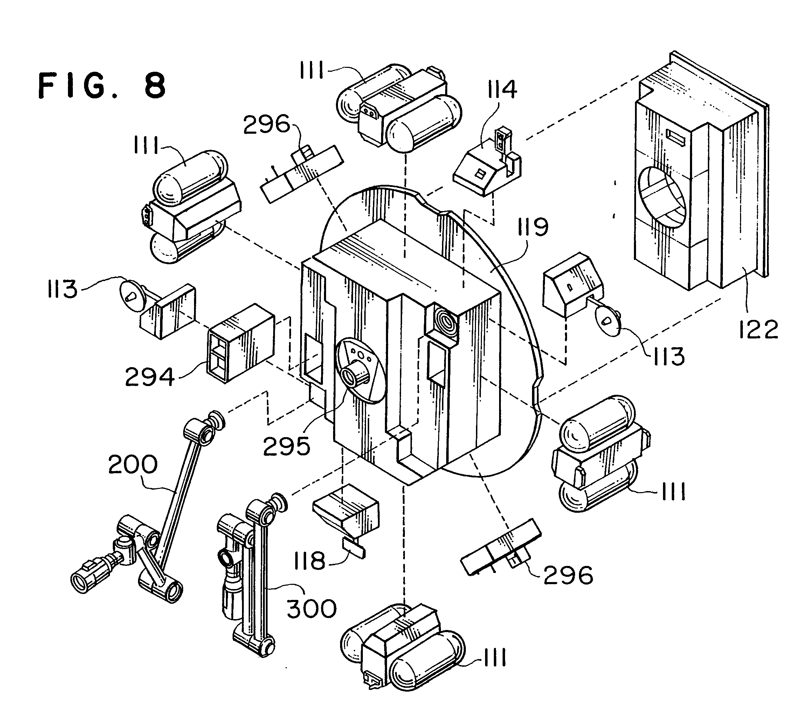

Then, other embodiment of a multi-arm working machine whose configuration is arranged to be modules formed on a base kernel according to the present invention will now be described with reference to Fig. 8.

As shown in Fig. 8, a working machine body consists of a basic kernel 119 serving as a base, the attitude control device 111, the communication device 113, the vision device 114, a radar device 118, the manipulators 200 and 300, the end effector accommodating rack 294 and the holding portion 296. Since the above-described components 111, 113, 114, 118, 200, 300, 294 and 296 are respectively arranged in the form of modules, the replacement for the maintenance can be performed by the module unit.

According to the present invention in which the large arm is arranged to be detachable to the working machine body, a plural large arms can be provided to correspond to a plural small arms. Therefore, the stiffness and strength of the arms can be secured and further dexterous operations can be performed by using an end effector having a redundant degree of freedom or a variety of end effectors.

Furthermore, the interfaces among the working machine and the arms can be simplified by distributing the processing devices and the driving units for the arms to each of the arms.

In addition, since the joints can be constituted by modules, the arms can be easily maintained and the configuration can be easily changed when the performance is desired to be improved.

Although the invention has been described in its preferred form with a certain degree of particularly, it is understood that the present disclosure of the preferred form has been changed in the details of construction and the combination and arrangement of parts may be resorted to without departing from the spirit and the scope of the invention as hereinafter claimed.

## Claims

1. A working machine system comprising:
a working machine body; and
at least one arm attached to said working machine body, wherein at least one arm is detachably attached to said working machine body.

2. A working machine system according to Claim 1, wherein said at least one arm is a large arm and at least one small arm can be attached to said large arm.

3. A working machine system according to Claim 1, wherein said at least one arm has 7 or more degrees of freedom.

4. A working machine system according to Claim 2, wherein said large arm and/or said small arm has 7 or more degrees of freedom.

5. A working machine system according to Claim 1, wherein said at least one arm is constituted to be a master-slave system.

6. A working machine system according to Claim 2, wherein said large arm and/or said small arm is constituted to be a master-slave system.

7. A working machine system according to Claim 1, wherein a driving unit connected to a central processing unit installed in said working machine body is installed at the junction between said at least one arm and said working machine body.

8. A working machine system according to Claim 2, wherein a driving unit connected to a central processing unit installed in said working machine body is installed at the junction between said at least one large arm and said small arm connected to said at least one large arm and/or the junction between said large arm and said working machine body.

9. A working machine system according to Claim 1, wherein said at least one arm is constituted in such a manner that it can be controlled in a force feedback manner.

10. A working machine system according to Claim 2, wherein said large arm and/or said small arm is constituted in such a manner that it can be controlled in a force feedback manner.

11. A working machine system according to Claim 1, wherein said at least one arm is constituted in such a manner that two or more types of end effectors can be attached thereto.

12. A working machine system according to Claim 2, wherein said large arm and/or said small arm is constituted in such a manner that two or more types of end effectors can be attached thereto.

# F I G. 1

# F I G. 2A

EP 0 402 599 A1

# FIG. 2B

| FIG. 2 |
| --- |
| FIG. 2A |
| FIG. 2B |

EP 0 402 599 A1

# FIG. 3

400

411 ATTITUDE CONTROL DEVICE

412 HEAT CONTROL DEVICE

413 COMMUNICATION DEVICE

414 VISION DEVICE

410

POWER DEVICE

BATTERY

SOLAR CELLS

423

422

421

420

ADMINIS-TRATION DEVICE 431

430

CENTRAL PROCESSING UNIT 432

CAPTURING DEVICE 591

500

511 PROCESS-ING DEVICE

DRIVING UNIT 512

510

SENSOR 514

MOTOR 513

JOINT 520

JOINT 530

JOINT 540

JOINT 550

JOINT 560

JOINT 570

FORCE / TORQUE SENSOR 580

CAPTURING DEVICE 592

END EFFECTOR 590

CAPTURING DEVICE 691

600

611 PROCESS-ING DEVICE

DRIVING UNIT 612

610

SENSOR 614

MOTOR 613

JOINT 620

JOINT 630

JOINT 640

JOINT 650

JOINT 660

JOINT 670

FORCE / TORQUE SENSOR 680

CAPTURING DEVICE 692

END EFFECTOR 690

# F I G. 4

# FIG. 5

# FIG. 6

EP 0 402 599 A1

FIG. 7

# FIG. 8

EP 0 402 599 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4780047 (HOLT)<br>* column 2, lines 20 - 35 *<br>* column 4, lines 14 - 46 *<br>* column 10, lines 55 - 62 *<br>* column 11, lines 35 - 39 * | 1, 3, 5, 9, 11 | B25J9/08<br>B25J9/00<br>B25J5/00 |
| Y | | 2, 4, 6, 7, 10 | |
| Y | WO-A-8701672 (NAVICULA)<br>* abstract *<br>* page 5, lines 13 - 19 * | 2, 4, 6, 10 | |
| A | | 8 | |
| X | EP-A-0218139 (MEIDENSHA)<br>* column 3, lines 40 - 48 * | 1 | |
| Y | US-A-4518308 (GRZYBOWSKI)<br>* column 3, lines 4 - 40 *<br>* column 6, lines 19 - 68 * | 7 | |
| A | DE-A-3244211 (ERNO)<br>* the whole document * | 1, 9 | TECHNICAL FIELDS SEARCHED (Int. Cl.5) |
| A | US-A-4693663 (BRENHOLT)<br>* column 2, line 62 - column 3, line 16 *<br>* column 5, lines 9 - 21 * | 7 | B25J<br>B64G |
| A,D | JP-A-63089280 (HITACHI)<br>* figure 1 *& US-A-4865514 (Tsuchihashi)- | 2, 4, 6, 10 | |
| A | US-A-4738583 (MACCONOCHIE) | | |
| A | US-A-4585388 (GOSSAIN) | | |

The present search report has been drawn up for all claims

| Place of search | Date of completion of the search | Examiner |
|---|---|---|
| THE HAGUE | 06 AUGUST 1990 | LAMMINEUR P.C.G. |

EPO FORM 1503 03.82 (P0401)